# EUROPEAN PATENT APPLICATION

(11) **EP 4 819 354 A1**
(43) Date of publication of application: **07.10.2026**
(21) Application number: 24926669.3
(22) Date of filing: 23.08.2024
(51) Int. Cl.: H01M 50/502

(54) **BATTERY AND ELECTRIC DEVICE**

(30) Priority: 27.02.2024 CN 202420364545 U
(71) Applicant: Contemporary Amperex Technology Co., Limited, Ningde, Fujian 352100 (CN)
(72) Inventor: YANG, Haiqi, Ningde, Fujian 352100 (CN); LIAO, Boxiang, Ningde, Fujian 352100 (CN); HUANG, Xiaoteng, Ningde, Fujian 352100 (CN); WANG, Wenli, Ningde, Fujian 352100 (CN); TANG, Yu, Ningde, Fujian 352100 (CN); XU, Chenyi, Ningde, Fujian 352100 (CN); CAO, Shanshan, Ningde, Fujian 352100 (CN)
(74) Representative: Kraus & Lederer PartGmbB
(86) International application number: PCT/CN2024/114172
(87) International publication number: WO 2025/179802

(57) **Abstract**

A battery (100) and an electric device. The battery (100) comprises a case (10), battery cells (20), a thermal management assembly (30), a conductive member (40), and a buffer structure (50). The case (10) is provided with an accommodating cavity (10a). The battery cells (20) are arranged in the accommodating cavity (10a). The thermal management assembly (30) is arranged in the accommodating cavity (10a) and is configured to perform heat exchange with the battery cells (20), and the thermal management assembly (30) comprises at least two heat exchange members (31). The conductive member (40) is electrically connected between each heat exchange member (31) and the case (10). The buffer structure (50) is arranged on at least one of the conductive member (40) and the heat exchange members (31), and the buffer structure (50) is configured to enable the conductive member (40) to always keep in contact with each heat exchange member (31) when the conductive member (40) is deformed. The structure can improve the safety performance of the battery (100).

## Description

### CROSS-REFERENCE TO RELATED APPLICATION

The present application claims priority to Chinese Patent Application No. 202420364545.X, filed on February 27, 2024, and entitled "BATTERY AND ELECTRIC DEVICE", the content of which is incorporated herein by reference in its entirety.

### TECHNICAL FIELD

The present application relates to the technical field of batteries, and in particular, to a battery and an electric device.

### BACKGROUND

At present, in electric devices such as vehicles, it is often necessary to provide corresponding power by means of batteries. However, during the operation of the battery, the problem of poor contact is prone to occur, thereby adversely affecting the use of the electric device.

### SUMMARY

In view of the above problem, the present application provides a battery and an electric device to improve the safety performance of the battery.

In one aspect, the embodiments of the present application provide a battery. The battery includes a case, a battery cell, a thermal management assembly, a conductive member, and a buffer structure. The case is provided with an accommodating cavity. The battery cell is disposed in the accommodating cavity. The thermal management assembly is disposed in the accommodating cavity and configured to exchange heat with the battery cell, and the thermal management assembly includes at least two heat exchange members. The conductive member is electrically connected between each heat exchange member and the case. The buffer structure is arranged on at least one of the conductive member and the heat exchange member, and the buffer structure is configured to enable the conductive member to always be in contact with each heat exchange member when the conductive member is deformed.

In the above solutions, the buffer structure is arranged on at least one of the conductive member and the heat exchange member, so that the conductive member, even when being deformed, can still be ensured to always be in contact with each heat exchange member, and problems such as warping and poor contact with the heat exchange member will not occur. This ensures the reliability of the electrical connection between the conductive member and each heat exchange member, thereby ensuring the equipotential connection between each heat exchange member and the case and improving the safety performance of the battery.

In some embodiments, the heat exchange member includes a heat exchange plate and a current collector; the battery cell is clamped between two adjacent heat exchange plates in an arrangement direction of the two or more heat exchange members, and the current collector is connected to one side of the heat exchange plate in a direction intersecting with the arrangement direction and protrudes from the battery cell; the current collector is provided with a groove, and the conductive member is disposed in the groove and electrically connected to the current collector.

In the above solution, the heat exchange plate can be configured to perform thermal management on the battery cell, so that the battery cell is kept at an appropriate temperature. The current collector is configured to be electrically connected to the conductive member to ensure the equipotential connection between the conductive member and the case. In addition, the conductive member is disposed in the groove of the current collector, which facilitates mounting and positioning and is also conducive to increasing the connection tightness between the conductive member and the current collector.

In some embodiments, the buffer structure includes a buffer notch formed in the conductive member, and the buffer notch is located between two adjacent heat exchange members.

In the above solutions, the buffer notch is formed in the conductive member, and the buffer notch is formed between two adjacent heat exchange members, so that when the conductive member is deformed, the buffer notch can absorb the deformation of the conductive member after being pressed, which enables the conductive member to always be in contact with each heat exchange member, thereby preventing problems such as warping of the conductive member, ensuring the reliability of the electrical connection between the conductive member and the heat exchange member, and thus improving the safety performance of the battery, while achieving easy operation and convenient processing.

In some embodiments, the conductive member is in a strip-shaped structure and is arranged to extend in a first direction; a number of the buffer notches is two or more, and the two or more buffer notches are spaced apart from each other in the first direction.

In the above solutions, the conductive member is in a strip-shaped structure, which facilitates mounting, positioning, processing, and manufacturing, and is conducive to ensuring the reliability of the electrical connection between the conductive member and each heat exchange member. In addition, the conductive member is provided with two or more buffer notches, which can better absorb the deformation of the conductive member, thereby helping to further ensure the reliability of the electrical connection between the conductive member and the heat exchange member and thus improving the safety performance of the battery.

In some embodiments, the buffer notches are formed in pairs, and the buffer notches formed in pairs are respectively located on two sides of the conductive member in the first direction; the buffer notches formed in pairs separate at least a portion of the conductive member to form a middle segment and end segments, with the middle segment and the end segments respectively connected, in an abutting manner, between the heat exchange member and the case.

In the above solutions, during the transportation or operation of the battery, the deformation of the conductive member is likely to cause the problem of warping at the two ends thereof in the first direction. By positioning the buffer notches formed in pairs on the two sides of the conductive member in the first direction, the problem of warping at the two ends of the conductive member can be prevented, thereby ensuring the reliability of the electrical connection between the conductive member and the heat exchange member and helping to reduce the processing costs.

In some embodiments, the buffer notch is formed between an outermost heat exchange member and a next outermost heat exchange member in the thermal management assembly, and in the first direction, a minimum distance between the buffer notch and the outermost heat exchange member is less than a minimum distance between the buffer notch and the next outermost heat exchange member.

In the above solutions, the problem that portions of the conductive member at the two ends thereof are prone to warping after being pressed by the heat exchange member can be alleviated, thereby ensuring that all heat exchange members located on the outermost side of the thermal management assembly can be in contact with the conductive member, and ensuring that all heat exchange members located on the next outermost side of the thermal management assembly can also be in contact with the conductive member. As a result, the reliability of the electrical connection between the conductive member and the heat exchange member is ensured.

In some embodiments, at least one of the buffer notches is a through hole penetrating through the conductive member, or at least one of the buffer notches is a groove body, with a bottom of the groove body being connected to the conductive member.

In the above solutions, the buffer notch may be configured in the form of the through hole and/or the groove body, which can prevent the conductive member from partially falling off after being deformed under pressure, and ensure the reliability of the electrical connection between the conductive member and the heat exchange member, thereby improving the safety performance of the battery and also helping to enhance the diversity of the conductive member.

In some embodiments, an aperture dimension of the buffer notch in the first direction is less than spacing between two adjacent heat exchange members.

In the above solutions, the aperture dimension of the buffer notch in the first direction is configured to be less than the spacing between two adjacent heat exchange members that are relatively proximal to the buffer notch, which is conducive to ensuring that each heat exchange member can be electrically connected to the conductive member, thereby ensuring the reliability of the electrical connection between the conductive member and the heat exchange member.

In some embodiments, the buffer structure further includes a widening body; in the arrangement direction of the two or more heat exchange members, heat exchange members located at two ends of the thermal management assembly are provided with the widening body, and the widening body is electrically connected to the conductive member.

In the above solutions, by arranging the widening body on the heat exchange members located at the two ends of the thermal management assembly, the contact area between the conductive member and the heat exchange members located at the two ends can be increased, so that the conductive member is always in contact with each heat exchange member, which is conducive to ensuring the reliability of the electrical connection between the conductive member and the heat exchange member.

In some embodiments, in the arrangement direction of the heat exchange members, a length dimension of the widening body is less than spacing between two adjacent current collectors, and/or in a second direction, the length dimension of the widening body is less than a length dimension of the current collector, the second direction intersecting with the arrangement direction of the heat exchange members.

In the above solutions, the length dimension of the widening body in the arrangement direction is configured to be less than the spacing between two adjacent current collectors, so that interference between two adjacent current collectors can be avoided; the length dimension of the widening body in the second direction is configured to be less than the length dimension of the current collector in the second direction, so that interference between the widening body and other members can be avoided, and the processing costs can be reduced.

In some embodiments, in a third direction, a projection of the widening body at least partially overlaps with the conductive member, and/or spacing between the widening body and the conductive member is not greater than spacing between the current collector and the conductive member, the third direction intersecting with the arrangement direction of the heat exchange members.

In the above solutions, in the third direction, the projection of the widening body at least partially overlaps with the conductive member, which ensures the effectiveness of the electrical connection between the widening body and the conductive member. Similarly, the spacing between the widening body and the conductive member is not greater than the spacing between the current collector and the conductive member, which can ensure the effectiveness of the electrical connection between the widening body and the conductive member.

In a second aspect, the embodiments of the present application provide an electric device. The electric device includes the battery in any one of the above embodiments. The battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic exploded view of the structure of a battery according to an embodiment of the present application;
FIG. 3 is a schematic structural diagram of a conductive member in a battery according to an embodiment of the present application;
FIG. 4 is a schematic structural diagram of a conductive member in another battery according to an embodiment of the present application;
FIG. 5 is a schematic structural diagram of a conductive member in yet another battery according to an embodiment of the present application;
FIG. 6 is a schematic exploded view of the structure of another battery according to an embodiment of the present application;
FIG. 7 is an enlarged schematic structural diagram of P in FIG. 6; and
FIG. 8 is a schematic exploded view of the structure of yet another battery according to an embodiment of the present application.

In the drawings:
1000: vehicle; 100: battery; 200: controller; 300: motor;
10: case; 10a: accommodating cavity; 11: cover plate; 12: accommodating frame;
20: battery cell;
30: thermal management assembly; 31: heat exchange member; 311: heat exchange plate; 312: current collector; 312a: groove;
40: conductive member; 41: middle segment; 42: end segment;
50: buffer structure; 51: buffer notch; 511: through hole; 512: groove body; 52: widening body;
X: first direction; Y: second direction; Z: third direction.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

In order to realize the heat dissipation and cooling of a battery cell, structures, such as a water cooling plate, are usually disposed inside the battery to ensure that the temperature of the battery cell remains within a safe range. Further, in order to prevent a current from being generated between the water cooling plate and the case of the battery, it is necessary to perform insulation between the water cooling plate and the case of the battery. However, during the transportation or use of the battery, the insulation between the battery cell and the case is likely to fail due to a fault. In order to avoid current flowing through the case, a conductive member on the case can be brought to the same potential by means of an equipotential connection. After the equipotential connection, even if in contact with the conductive member, the risk of electric shock will not be caused.

In an existing battery, conductive foam is usually arranged between the water cooling plate and the battery case to ensure the equipotential connection between the water cooling plate and the case, resulting in problems such as warping of the foam itself, poor contact between the cooling plate and the foam, and inability to ensure the equipotential connection between the cooling plate and the battery case.

Based on the above technical problems, the present application provides a battery. A buffer structure is arranged on at least one of a conductive member and a heat exchange member, so that the conductive member, even when being deformed, can still be ensured to always be in contact with each heat exchange member, and problems such as warping and poor contact with the heat exchange member will not occur. This ensures the reliability of the electrical connection between the conductive member and the heat exchange member, thereby ensuring the equipotential connection between each heat exchange member and the case and improving the safety performance of the battery.

The technical solutions described in the embodiments of the present application are applicable to electric devices using batteries. The electric device is, e.g., a mobile phone, a portable device, a laptop computer, an electric bicycle, an electric vehicle, a ship, a spacecraft, an electric toy, or an electric tool. The spacecraft is, e.g., an airplane, a rocket, a space shuttle, or a spaceship. The electric toy includes, e.g., a stationary or mobile electric toy, specifically a game console, an electric car toy, an electric ship toy, and an electric airplane toy. The electric tool includes, e.g., a metal cutting electric tool, a grinding electric tool, an assembly electric tool, and a railway electric tool, specifically an electric drill, an electric grinder, an electric wrench, an electric screwdriver, an electric hammer, an impact drill, a concrete vibrator, or an electric planer.

The battery described in the embodiments of the present application is not limited to being applicable to the electric devices described above, but for the sake of brevity in description, the following embodiments are described by taking an electric vehicle as an example.

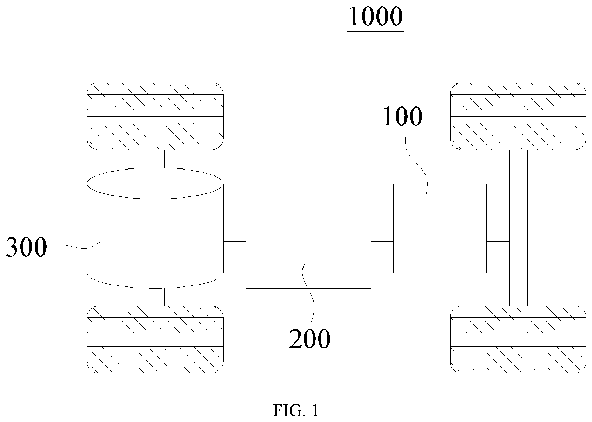

Referring to FIG. 1, FIG. 1 is a simple schematic diagram of a vehicle 1000 according to an embodiment of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 may be disposed inside the vehicle 1000. Specifically, for example, the battery 100 may be disposed at the bottom, the head, or the rear of the vehicle 1000. The battery 100 may be configured to power the vehicle 1000. For example, the battery 100 may serve as an operation power source for the vehicle 1000. The vehicle 1000 may further include a controller 200 and a motor 300. For example, the controller 200 is configured to control the battery to supply power to the motor 300. The battery may be configured for the starting, navigation, etc., of the vehicle 1000. Certainly, the battery 100 may also be configured to drive the vehicle 1000 to travel, replacing or partially replacing fuel or natural gas to provide driving power for the vehicle 1000.

The following describes the structure of the battery 100 in detail with reference to the drawings.

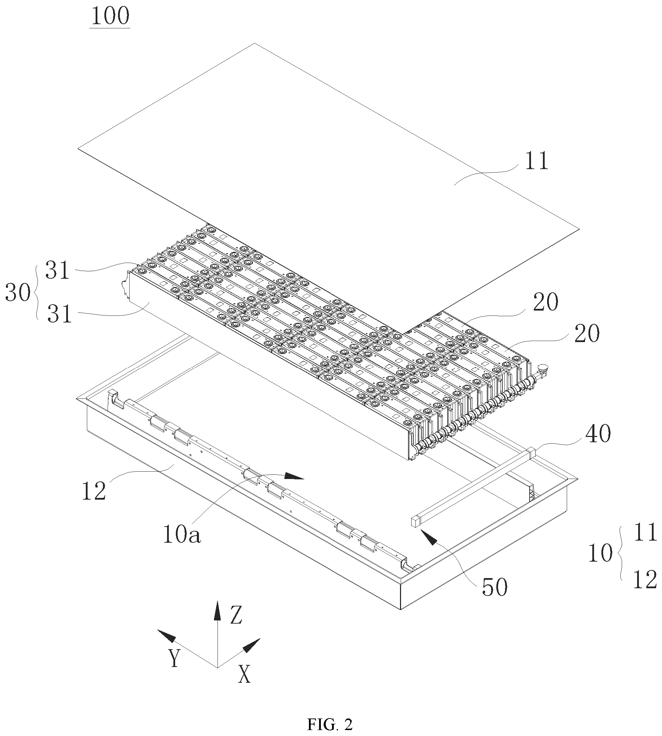

Referring to FIG. 2, the embodiments of the present application provide a battery 100. The battery includes a case 10, a battery cell 20, a thermal management assembly 30, a conductive member 40, and a buffer structure 50. The case 10 is provided with an accommodating cavity 10a. The battery cell 20 is disposed in the accommodating cavity 10a. The thermal management assembly 30 is disposed in the accommodating cavity 10a and configured to exchange heat with the battery cell 20. The thermal management assembly 30 includes at least two heat exchange members 31. The conductive member 40 is electrically connected between each heat exchange member 31 and the case 10. The buffer structure 50 is arranged on at least one of the conductive member 40 and the heat exchange member 31, and the buffer structure 50 is configured to enable the conductive member 40 to always be in contact with each heat exchange member 31 when the conductive member 40 is deformed.

In the embodiments of the present application, a first direction X, a second direction Y, and a third direction Z are arranged to intersect with each other. The first direction X may be a width direction of the case 10, the second direction Y may be a length direction of the case 10, and the third direction Z may be a height direction of the case 10.

The case 10 may be of a simple three-dimensional structure, such as a single rectangular parallelepiped or cylinder, or may also be of a complex three-dimensional structure composed of simple three-dimensional structures, such as a rectangular parallelepiped or a cylinder, which is not limited in the embodiments of the present application. The case 10 may be made of an alloy material such as aluminum alloy and iron alloy, or a polymer material such as polycarbonate and polyisocyanurate foam plastic, or a composite material such as glass fiber plus epoxy resin, which is also not limited in the embodiments of the present application.

The case 10 is configured to accommodate the battery cell 20, and the case 10 may be of various structures to seal and protect the battery cell 20 and other members inside the case 10.

In some embodiments, the case 10 includes a cover plate 11 and an accommodating frame 12, the cover plate 11 is disposed at one end of the accommodating frame 12 in the third direction Z, and the cover plate 11 and the accommodating frame 12 jointly define, in an enclosing manner, the case 10 for accommodating the battery cell 20 and other members to ensure the sealing requirement.

In some embodiments, the case 10 may be a part of the chassis structure of the vehicle. For example, a portion of the case 10 may be at least a portion of the floor of the vehicle 1000, or a portion of the case 10 may be at least a portion of a transverse beam and a longitudinal beam of the vehicle 1000.

In some embodiments, the battery 100 may be an energy storage device. The energy storage device includes an energy storage container, an energy storage electrical cabinet, and the like.

The battery 100 mentioned in the embodiments of the present application refers to a single physical module including one or a plurality of battery cells 20 to provide higher voltage and capacity. If a plurality of battery cells 20 are provided, the plurality of battery cells 20 may be connected in series, in parallel, or in series-parallel. The series-parallel connection means that both series connection and parallel connection are present in the connection of the plurality of battery cells 20. The plurality of battery cells 20 may be directly connected in series, in parallel, or in series-parallel, and then the whole formed by the plurality of battery cells 20 is accommodated in the case 10. Certainly, it may be that the plurality of battery cells 20 are first connected in series, in parallel, or in series-parallel to form battery 100 sets, and then the plurality of battery 100 sets are connected in series, in parallel, or in series-parallel to form a whole and accommodated in the case 10.

In the embodiments of the present application, the battery cell 20 may include a lithium-ion battery cell 20, a sodium-ion battery cell 20, a magnesium-ion battery cell 20, or the like, which is not limited in the embodiments of the present application. The battery cell 20 may be flat, rectangular parallelepiped-shaped, or in other shapes, which is also not limited in the embodiments of the present application. According to the packaging method, the battery cells 20 are typically divided into three types: cylindrical battery cells 20, prismatic battery cells 20, and pouch battery cells 20, which is not limited in the embodiments of the present application. However, for the sake of brevity, the following embodiments are all illustrated using a prismatic battery cell 20 as an example.

Still referring to FIG. 2, the battery 100 provided in the embodiments of the present application further includes a thermal management assembly 30, a conductive member 40, and a buffer structure 50. The thermal management assembly 30 is disposed in the accommodating cavity 10a and includes at least two heat exchange members 31. Optionally, the at least two heat exchange members 31 are spaced apart from each other, and a battery cell 20 is clamped between two adjacent heat exchange members 31.

Illustratively, two or more heat exchange members 31 are spaced apart from each other in the first direction X, and the heat exchange members 31 are connected to the battery cell 20 to adjust the temperature of the battery cell 20.

Thermal management should be understood as meaning that the heat between the heat exchange member 31 and the battery cell 20 can be transferred therebetween. For example, the heat exchange member 31 is in direct contact with the battery cell 20 to achieve contact heat exchange, or a thermally conductive structure (such as a thermally conductive adhesive) is arranged between the heat exchange member 31 and the battery cell 20 for heat exchange. Specifically, by dissipating heat from and cooling down, or heating the battery cell 20 by the heat exchange member 31, the temperature of the battery cell 20 is controlled to be within a suitable range, thereby improving the service life and safety performance of the battery cell 20. In addition, when thermal runaway occurs in a certain battery cell 20, the heat generated by the battery cell 20 experiencing thermal runaway will be taken away by the heat exchange member 31 in contact with the battery cell experiencing thermal runaway, which lowers the temperature of the battery cell 20 experiencing thermal runaway and avoids the occurrence of thermal runaway in adjacent battery cells 20, thereby ensuring the safety performance of the battery cell 20. The heat exchange member 31 may be configured to perform thermal management on the battery cell 20 to ensure that the battery cell 20 is within an appropriate temperature range, thereby ensuring the safety performance of the battery 100.

Optionally, the number of heat exchange members 31 may be set to two, and certainly, may also be set to more. Optionally, the heat exchange member 31 may be configured as an elliptical or parallel-sided plate-shaped structure.

The conductive member 40 is electrically connected between each heat exchange member 31 and the case 10 to ensure the equipotential connection between each heat exchange member 31 and the case 10, thereby ensuring the safety performance of the battery 100.

Optionally, the conductive member 40 may be connected to the case 10 in an abutting mode, and may also be bonded to the case 10 by a conductive adhesive.

The conductive member 40 has the ability to conduct electricity and be elastically deformed, so that the conductive member can be pressed between each heat exchange member 31 and the case 10, meeting the equipotential connection requirement between each heat exchange member 31 and the case 10.

Optionally, the conductive member 40 includes an elastic part and a conductive part covering the elastic part, and the elastic part supports the conductive part. The elastic part may be made of various materials, such as foam and rubber.

Optionally, the conductive part is made of a flexible material; that is, the conductive part has a flexible deformation capability, so that the conductive part can better adapt to the thermal management assembly 30 and the case 10 under the action of the elastic supporting force provided by the elastic part, which is conducive to increasing the contact area between the conductive part and the thermal management assembly 30 and the contact area between the conductive part and the case 10, thereby ensuring the equipotential connection between the thermal management assembly 30 and the case 10 and helping to ensure the safety performance of the battery 100.

Optionally, the conductive part may be made of one or more of conductive cloth, tin foil paper, aluminum foil paper, or the like.

Optionally, the conductive member 40 is disposed on one side inside the case 10 in the second direction Y; that is, the conductive member 40 is electrically connected to one side of the thermal management assembly 30 in the second direction Y to prevent the safety problem caused by the contact between the conductive member and the battery cell 20.

Since the thermal management assembly 30 includes at least two heat exchange members 31, the conductive member 40 is pressed inside the case 10 by the at least two heat exchange members 31. During the transportation or use of the battery 100, a certain part of the conductive member 40 itself is prone to problems such as warping, causing poor contact between the conductive member and a certain heat exchange member 31.

Therefore, in the embodiments of the present application, the buffer structure 50 is disposed on at least one of the conductive member 40 and the heat exchange member 31, so that the buffer structure 50 can enable the conductive member 40 to always be in contact with each heat exchange member 31 when the conductive member 40 is deformed, which ensures the reliability of the electrical connection between the conductive member 40 and each heat exchange member 31, thereby ensuring the equipotential connection between the heat exchange member 31 and the case 10 and improving the safety performance of the battery 100.

Optionally, the buffer structure 50 may be disposed on the conductive member 40 or the heat exchange member 31. Certainly, the buffer structure may also be disposed on both the conductive member 40 and the heat exchange member 31.

Optionally, the buffer structure 50 may include a first extending component disposed on the conductive member 40. Specifically, the part of the conductive member 40 that is prone to have poor contact with the heat exchange member 31 during operation of the battery 100 is determined through experimental testing or experience, and the first extending component is disposed here to absorb the deformation of the conductive member 40 when the conductive member 40 is deformed, so that the conductive member 40 can be in contact with each heat exchange member 31, without causing the problem of poor contact, thereby ensuring the equipotential connection between the heat exchange member 31 and the case 10 and improving the safety performance of the battery 100.

Optionally, the buffer structure 50 may further include a second extending component disposed on the heat exchange member 31. Specifically, the part of the heat exchange member 31 that is prone to have poor contact with the conductive member 40 during operation of the battery 100 is determined through experimental testing or experience, and the second extending component is disposed here to increase the area of the heat exchange member 31 configured to be in contact with the conductive member 40, so that when the conductive member 40 is deformed, the conductive member 40 can be in contact with each heat exchange member 31 and the second extending component, without causing the problem of poor contact, thereby ensuring the equipotential connection between the heat exchange member 31 and the case 10 and improving the safety performance of the battery 100.

In some embodiments, a medium flow channel is provided in the heat exchange member 31, so that a heat exchange medium (such as water, air, or a phase change material) can circulate in the medium flow channel to exchange heat with the battery cell 20, thereby enabling the heat exchange member 31 to achieve thermal management on the battery cell 20.

Referring to FIGs. 1 to 7 together, in some embodiments, the heat exchange member 31 includes a heat exchange plate 311 and a current collector 312. In an arrangement direction of the two or more heat exchange members 31, the battery cell 20 is clamped between two adjacent heat exchange plates 311, and the current collector 312 is connected to one side of the heat exchange plate 311 in a direction intersecting with the arrangement direction and protrudes from the battery cell 20; the current collector 312 is provided with a groove 312a, and the conductive member 40 is disposed in the groove 312a and electrically connected to the current collector 312.

Such an arrangement method is conducive to improving the thermal management efficiency of the thermal management assembly 30 on the battery cell 20, facilitates the mounting and positioning of the conductive member 40, and is conducive to improving the connection tightness between the conductive member 40 and the heat exchange member 31.

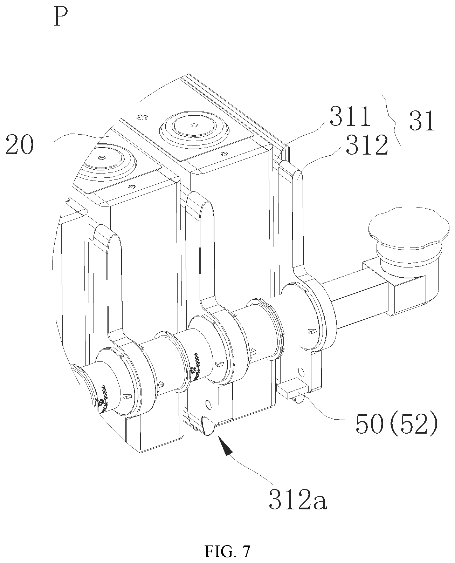

As shown in FIG. 7, two or more heat exchange members 31 are spaced apart from each other in the first direction X, and a battery cell 20 is clamped between two adjacent heat exchange plates 311. Such an arrangement method can increase the contact area between the battery cell 20 and the heat exchange plate 311, thereby helping to improve the thermal management efficiency of the thermal management assembly 30 on the battery cell 20.

A medium flow channel is provided in the heat exchange plate 311 to exchange heat with the battery cell 20, so that the heat exchange member 31 can achieve thermal management on the battery cell 20.

Optionally, the current collector 312 is connected to one side of the heat exchange plate 311 in the second direction Y and protrudes from the battery cell 20, so as to avoid interference with the battery cell 20, which could otherwise cause safety problems such as the electrical connection therebetween.

Optionally, the groove 312a is formed on one side of the current collector 312 in the third direction Z, and the conductive member 40 is disposed in the groove 312a and electrically connected to the current collector 312, so as to ensure the effectiveness when the conductive member 40 is electrically connected between the heat exchange member 31 and the case 10 and facilitate the mounting and positioning of the conductive member 40.

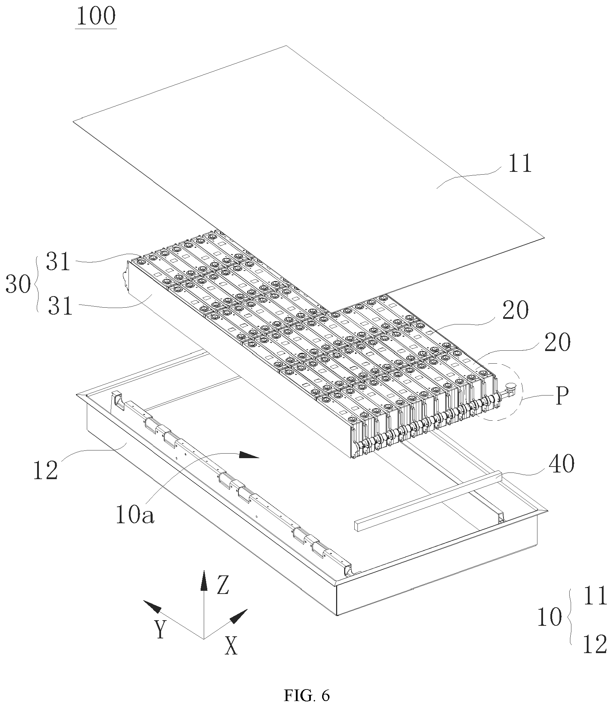

As shown in FIGs. 6 and 7, illustratively, the current collector 312 is recessed in the third direction Z and/or the second direction Y to form the groove 312a; the groove 312a is formed penetrating through the current collector 312 in the first direction X, and the groove 312a is provided with a first groove wall connected to the current collector 312 in the second direction Y, and a second groove wall connected to the current collector 312 in the third direction Z. Such an arrangement method facilitates processing and manufacturing and is beneficial for the assembly and positioning with the conductive member 40. Referring to FIGs. 2 to 5, in some embodiments, the buffer structure 50 includes a buffer notch 51 formed in the conductive member 40, and the buffer notch 51 is located between two adjacent heat exchange members 31.

The buffer notch 51 should be understood as cutting the conductive member 40 such that the conductive member 40 becomes a structure that is at least partially discontinuous.

By forming the buffer notch 51 in the conductive member 40, when each heat exchange member 31 presses the conductive member 40, the buffer notch 51 can absorb the deformation of the conductive member 40 after being pressed. Specifically, when the heat exchange member 31 presses the conductive member 40 in the third direction Z, the conductive member 40 itself is deformed to adapt to the pressing force applied by the heat exchange member 31. The deformation of the conductive member 40 in the first direction X may cause the area of the buffer notch 51 to be reduced; that is, the buffer notch 51 absorbs the deformation of the conductive member 40, so that the conductive member 40 is free of warping, avoiding the problem that a portion of the conductive member 40 cannot be in contact with the heat exchange member 31. This is conducive to ensuring the equipotential connection between the heat exchange member 31 and the case 10, thereby helping to ensure the safety performance of the battery 100.

The buffer notch 51 is located between two adjacent heat exchange members 31, which may be understood as that the buffer notch 51 is formed corresponding to a region between the two adjacent heat exchange members 31, that is, in the third direction Z, the projection of the buffer notch 51 is located between the two adjacent heat exchange members 31.

Such an arrangement method enables the buffer notch 51 and the heat exchange member 31 to be arranged in a staggered manner, ensuring the reliability of each heat exchange member 31 being able to contact the conductive member 40.

Optionally, the number of buffer notches 51 may be set to one or two, and certainly, may also be set to more.

Optionally, one buffer notch 51 may be correspondingly formed between every two adjacent heat exchange members 31, which is conducive to improving the reliability of each heat exchange member 31 being able to contact the conductive member 40.

Optionally, the buffer notch 51 may be formed in the middle portion of the conductive member 40, and certainly, may also be formed at the edge portion of the conductive member 40. The number and position of buffer notches 51 may be set according to the actual structure of the thermal management assembly 30, which is not limited in the present application.

Optionally, the buffer notch 51 may be in an irregular shape, or may be a regular rectangular or arc-shaped notch formed on the conductive member 40.

Optionally, the buffer notch 51 is formed in the conductive member 40, and the conductive member 40 may be configured in two structures, namely a cut-off structure and a non-cut-off structure. It should be understood that the conductive member 40 may be separated by the buffer notch 51 to form at least two portions. Certainly, the conductive member 40 may also be divided by the buffer notch 51 into a whole that is at least partially continuous.

In the embodiments of the present application, the buffer notch 51 is formed on the conductive member 40 to absorb the deformation of the conductive member 40 after being pressed, so as to prevent the conductive member 40 against the problems such as warping and ensure the reliability of the electrical connection between the conductive member 40 and the heat exchange member 31, thereby improving the safety performance of the battery 100, while achieving easy operation and convenient processing.

In some embodiments, the conductive member 40 is in a strip-shaped structure and is arranged to extend in the first direction X; the number of buffer notches 51 is two or more, and the two or more buffer notches 51 are spaced apart from each other in the first direction X.

Optionally, the conductive member 40 may be configured as a strip-shaped structure, such as a rectangular parallelepiped, a polygonal prism, or a cylinder, which is not limited in the present application.

By configuring the conductive member 40 as a strip-shaped structure, mounting and positioning are facilitated, as well as processing and manufacturing. Meanwhile, the contact with each heat exchange member 31 in the thermal management assembly 30 is also facilitated to ensure the connection reliability.

Optionally, two buffer notches 51 may be formed, and certainly, more buffer notches may be formed. Optionally, in the first direction X, the spacing between two adjacent buffer notches 51 may be configured to be the same, or certainly, may be configured to be different.

By forming two or more buffer notches 51 spaced apart from each other in the first direction X on the conductive member 40, more deformation of the conductive member 40 can be absorbed, which is conducive to further ensuring the reliability of the electrical connection between the conductive member 40 and the heat exchange member 31, thereby improving the safety performance of the battery 100, while achieving easy operation and convenient processing.

Optionally, the conductive member 40 includes a first wall and a second wall arranged opposite to each other in the first direction X, and a side wall connected between the first wall and the second wall. The first wall, the second wall, and a third wall jointly define, in an enclosing manner, a structure provided with a strip-shaped inner cavity, and the strip-shaped inner cavity may be filled with an elastic part to form the conductive member 40.

In some embodiments, the buffer notches 51 are formed in pairs, and the buffer notches 51 formed in pairs are respectively located on two sides of the conductive member 40 in the first direction X. The buffer notches 51 formed in pairs separate at least a portion of the conductive member 40 to form a middle segment 41 and end segments 42, with the middle segment 41 and the end segments 42 respectively connected, in an abutting manner, between the heat exchange member 31 and the case 10.

As can be seen from the above, the two or more heat exchange members 31 may be spaced apart from each other in the first direction X, and the conductive member 40 extends in the first direction X. When the battery 100 is in use, the pressure provided by the heat exchange member 31 to the conductive member 40 causes the conductive member 40 to deform, such that two sides of the conductive member 40 in the first direction X are prone to warping. Therefore, by arranging the buffer notches 51 formed in pairs on the two sides of the conductive member 40 in the first direction X, when the conductive member 40 is deformed under pressure, the buffer notches 51 can better absorb the deformation of the conductive member 40, such that the conductive member 40 can always be in contact with each heat exchange member 31. As a result, the problem of warping will not occur at positions on the two sides of the conductive member 40 in the first direction X, ensuring the reliability of the electrical connection between the conductive member 40 and the heat exchange member 31, thereby ensuring the equipotential connection between the heat exchange member 31 and the case 10 and improving the safety performance of the battery 100.

Optionally, in the first direction X, the length dimension of the middle segment 41 is greater than the length dimension of the end segment 42. Specifically, the length dimension of the middle segment 41 and the length dimension of the end segment 42 may be configured according to the structure of the conductive member 40 and the number of heat exchange members 31.

It should be noted that, when the buffer notch 51 is configured as a structure capable of cutting off the conductive member 40 and separating the same into at least two portions, the conductive member 40 may be separated to form a middle segment 41 and end segments 42 that are separately arranged, with the middle segment 41 and the end segments 42 respectively connected, in an abutting manner, between the heat exchange member 31 and the case 10, thereby ensuring the equipotential connection requirement therebetween. Illustratively, during the transportation or operation of the battery 100, each heat exchange member 31 included in the thermal management assembly 30 presses the conductive member 40, and thus the conductive member 40 is deformed. Since the middle segment 41 and the end segments 42 are separately arranged, the deformation of the middle segment 41 does not affect the end segments 42, so that the end segments 42 are prevented against the problem of warping, thereby meeting the reliability requirement of the connection between the conductive member 40 and the heat exchange member 31.

When the buffer notch 51 is configured to cut the conductive member 40 into a whole that is at least partially continuous, at least a portion of the conductive member 40 may be divided to form a middle segment 41 and end segments 42, which are at least partially connected. Illustratively, during the transportation or operation of the battery 100, each heat exchange member 31 included in the thermal management assembly 30 presses the conductive member 40, and thus the conductive member 40 is deformed. The deformation of the middle segment 41 may be absorbed by the buffer notch 51 without affecting the end segments 42, so that the end segments 42 are prevented against the problem of warping, thereby meeting the reliability requirement of the connection between the conductive member 40 and the heat exchange member 31.

In the above solutions, during the transportation or operation of the battery, the deformation of the conductive member 40 is likely to cause the problem of warping at the two ends thereof in the first direction X. By positioning the buffer notches 51 formed in pairs on the two sides of the conductive member 40 in the first direction X, the problem of warping at the two ends of the conductive member 40 can be prevented, thereby ensuring the reliability of the electrical connection between the conductive member 40 and the heat exchange member 31 and helping to reduce the processing costs.

In some embodiments, the buffer notch 51 is formed between the outermost heat exchange member 31 and the next outermost heat exchange member 31 in the thermal management assembly 30. In the first direction X, a minimum distance between the buffer notch 51 and the outermost heat exchange member 13 is less than a minimum distance between the buffer notch 51 and the next outermost heat exchange member 31.

Such an arrangement method can alleviate the problem that portions of the conductive member 40 at the two ends thereof are prone to warping after being pressed by the heat exchange member 31, thereby ensuring that all heat exchange members 31 located on the outermost side of the thermal management assembly 30 can be in contact with the conductive member 40.

In addition, by configuring the minimum distance between the buffer notch 51 and the outermost heat exchange member 13 in the first direction X to be less than the minimum distance between the buffer notch 51 and the next outermost heat exchange member 31, that is, by forming the buffer notch 51 proximal to the outermost heat exchange member 31 in the first direction X, it can be ensured that all heat exchange members 31 located on the outermost side of the thermal management assembly 30 can be in contact with the conductive member 40, and meanwhile, it can also be ensured that all heat exchange members 31 located on the next outermost side of the thermal management assembly 30 can also be in contact with the conductive member 40.

Specifically, in the case where the buffer notch 51 is configured as the structure capable of cutting off the conductive member 40, the two end segments 42 of the conductive member 40 can be in contact with two outermost heat exchange members 13, respectively, while two sides of the middle segment 41 of the conductive member 40 may have the problem of warping. Therefore, the minimum distance between the buffer notch 51 and the outermost heat exchange member 13 in the first direction X is configured to be less than the minimum distance between the buffer notch 51 and the next outermost heat exchange member 31, so that the two sides of the middle segment 41 are prevented from warping, thereby avoiding poor contact with the next outermost heat exchange member 31.

The outermost heat exchange member 31 should be understood as the heat exchange member 31 disposed adjacent to only one heat exchange member 31 in the thermal management assembly 30, and the next outermost heat exchange member 31 should be understood as the heat exchange member 31 disposed adjacent to the outermost heat exchange member 31.

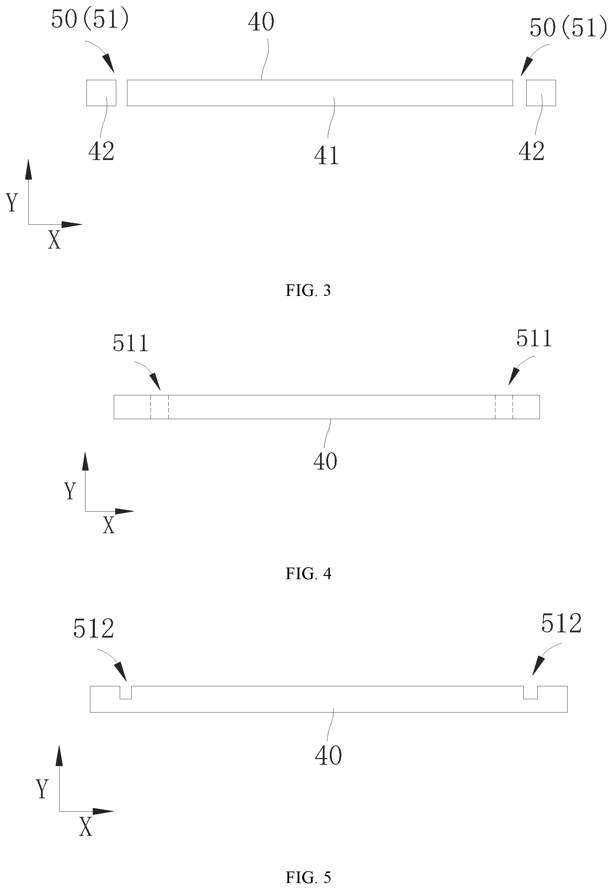

As shown in FIG. 4, in some embodiments, at least one buffer notch 51 is a through hole 511 that penetrates through the conductive member 40.

Optionally, the through hole 511 may be formed as a hole penetrating through the conductive member 40 in the third direction Z, and the through hole 511 may also be formed as a hole penetrating through the conductive member 40 in the second direction Y.

In the above solutions, by configuring the buffer notch 51 in the form of a through hole 511, the conductive member 40 can be prevented from partially falling off after being deformed under pressure, which ensures the reliability of the electrical connection between the conductive member 40 and the heat exchange member 31, thereby improving the safety performance of the battery 100 and also helping to enhance the diversity of the conductive member 40.

In addition, the through hole 511 can absorb the deformation of the conductive member 40 after being pressed, reduce the deformation of the conductive member 40, and ensure that the conductive member 40 is in contact with each heat exchange member 31.

As shown in FIG. 5, in some embodiments, at least one buffer notch 51 is a groove body 512, and the bottom of the groove body 512 is connected to the conductive member 40.

Optionally, an opening direction of the groove body 512 may be arranged toward the heat exchange member 31 in the third direction Z. Certainly, the opening direction of the groove body 512 may be arranged toward the heat exchange member 31 in the second direction Y.

In the above solutions, by configuring the buffer notch 51 in the form of a groove body 512, the conductive member 40 can be prevented from partially falling off after being deformed under pressure, which ensures the reliability of the electrical connection between the conductive member 40 and the heat exchange member 31, thereby improving the safety performance of the battery 100 and also helping to enhance the diversity of the conductive member 40.

In addition, the groove body 512 can absorb the deformation of the conductive member 40 after being pressed, reduce the deformation of the conductive member 40, and ensure that the conductive member 40 is in contact with each heat exchange member 31.

Optionally, the conductive member 40 may also be configured to include both the buffer notch 51 in the form of the through hole 511 and the buffer notch 51 in the form of the groove body 512, which is not limited in the present application. In some embodiments, an aperture dimension of the buffer notch 51 in the first direction X is less than spacing between two adjacent heat exchange members 31.

In the embodiments of the present application, according to the above configuration, the aperture dimension of the buffer notch 51 in the first direction X is configured to be less than the spacing between two adjacent heat exchange members 31 that abut against the conductive member 40 and are relatively proximal to the buffer notch 51, so as to ensure that each heat exchange member 31 can be electrically connected to the conductive member 40, thereby ensuring the reliability of the electrical connection between the conductive member 40 and the heat exchange member 31.

Illustratively, a ratio of the aperture dimension of the buffer notch 51 in the first direction X to the spacing between two adjacent heat exchange members 31 ranges from 1/5 to 3/5, which can ensure that the conductive member 40 and the heat exchange member 31 have a sufficient abutting area, and also help to ensure that the buffer notch 51 can absorb sufficient deformation.

Referring to FIGs. 2 to 5, in the battery 100 provided in the embodiments of the present application, a buffer structure 50 capable of absorbing the deformation may be arranged on the conductive member 40, so that the thermal management assembly 30 and the case 10 can always ensure the equipotential connection during the transportation or operation of the battery 100, which is conducive to ensuring the safety performance of the battery 100. In addition, the buffer structure 50 is simple in configuration and convenient to process.

Referring to FIGs. 6 and 7, in some embodiments, the buffer structure 50 further includes a widening body 52. In the arrangement direction of the two or more heat exchange members 31, the current collectors 312 located at the two ends of the thermal management assembly 30 are provided with the widening body 52, and the widening body 52 is electrically connected to the conductive member 40.

It can be understood that, in the embodiments of the present application, the current collectors 312 located at the two ends of the thermal management assembly 30 are the current collectors 312 located on the outermost heat exchange member 31 of the thermal management assembly 30.

In the above solutions, by arranging the widening body 52 on the current collectors 312 located at the two ends of the thermal management assembly 30, the contact area between the conductive member 40 and the current collectors 312 located at the two ends can be increased, so that the conductive member 40 is always in contact with each current collector 312, which is conducive to ensuring the reliability of the electrical connection between the conductive member 40 and the heat exchange member 31.

Optionally, the widening body 52 is arranged on the current collector 312, and the widening body 52 and the current collector 312 may be configured as an integrally formed structure, which is conducive to improving the manufacturing efficiency. Certainly, the widening body 52 and the current collector 312 may also be provided separately, which facilitates processing.

Optionally, the widening body 52 is connected to one side of the current collector 312 proximal to the battery cell 20 in the first direction X, which can reduce the occupied area of the thermal management assembly 30, thereby helping to improve the space utilization of the battery.

Optionally, the widening body 52 is connected to one side of the current collector 312 proximal to the groove 312a in the third direction Z, which is conducive to ensuring the effectiveness of the contact between the widening body 52 and the conductive member 40.

Optionally, the shape of the widening body 52 may be configured as any one of a rectangle, a circle, or an ellipse.

Optionally, the widening body 52 may be configured as a plate-shaped structure, which facilitates processing and manufacturing and facilitates assembly.

In some embodiments, in the arrangement direction of the heat exchange members 31, the length dimension of the widening body 52 is less than the spacing between two adjacent current collectors 312.

Such an arrangement method can prevent the widening body 52 from being in contact with the next outermost heat exchange member 31, thereby preventing interference therebetween and ensuring the safety of the battery.

In some embodiments, in the second direction Y, the length dimension of the widening body 52 is less than the length dimension of the current collector 312, and the second direction Y intersects with the arrangement direction of the heat exchange members 31.

By configuring the length dimension of the widening body 52 in the second direction Y to be less than the length dimension of the current collector 312 in the second direction Y, the interference between the widening body 52 and the battery cell 20 can be avoided, and the processing costs can be reduced.

In some embodiments, in the third direction Z, the projection of the widening body 52 at least partially overlaps with the conductive member 40, and the third direction Z intersects with the arrangement direction of the heat exchange members 31.

Such an arrangement method is conducive to ensuring the effectiveness of the contact between the widening body 52 and the conductive member 40, thereby helping to ensure that an electrical connection can be provided therebetween.

The third direction Z is arranged to intersect with the second direction Y.

In some embodiments, in the third direction Z, the spacing between the widening body 52 and the conductive member 40 is not greater than the spacing between the current collector 312 and the conductive member 40. The third direction Z intersects with the arrangement direction of the heat exchange members, and the third direction Z intersects with the arrangement direction of the heat exchange members 31.

Such an arrangement method is conducive to ensuring the effectiveness of the contact between the widening body 52 and the conductive member 40, thereby helping to ensure that an electrical connection can be provided therebetween.

In the third direction Z, the spacing between the widening body 52 and the conductive member 40 may be equal to or less than the spacing between the current collector 312 and the conductive member 40; that is, one end of the widening body 52 proximal to the case 10 in the third direction Z may be flush with one end of the current collector 31 proximal to the case 10 in the third direction Z, or may protrude from the end of the current collector 31 proximal to the case 10 in the third direction Z, which, in both cases, can ensure the effectiveness of the electrical connection between the widening body 52 and the conductive member 40.

Referring to FIGs. 6 and 7, in the battery 100 provided in the embodiments of the present application, a buffer structure 50 capable of absorbing the deformation may be arranged on the heat exchange member 31, so that the thermal management assembly 30 and the case 10 can always ensure the equipotential connection during the transportation or operation of the battery 100, which is conducive to ensuring the safety performance of the battery 100. In addition, the buffer structure 50 is simple in configuration and convenient to process.

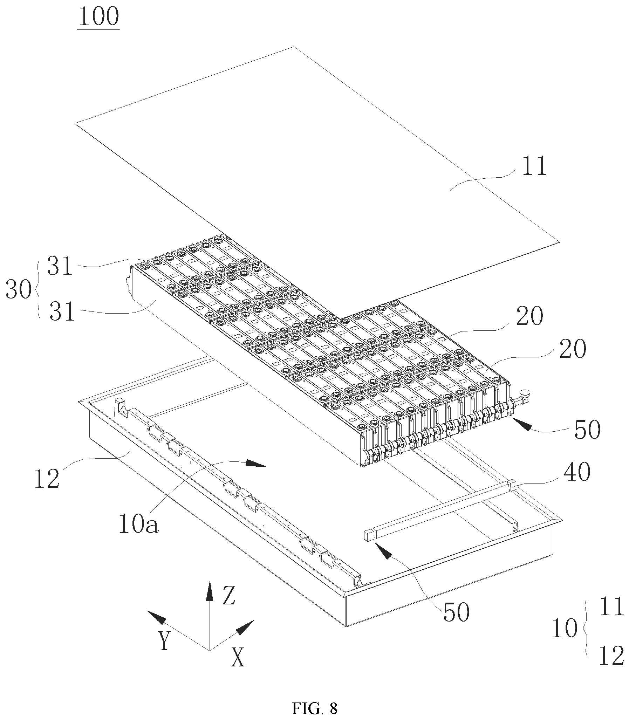

Referring to FIG. 8, in the battery 100 provided in the embodiments of the present application, the conductive member 40 and the heat exchange member 31 may each be provided with a buffer structure 50 capable of absorbing the deformation, so that the thermal management assembly 30 and the case 10 can always ensure the equipotential connection during the transportation or operation of the battery 100, which is conducive to ensuring the safety performance of the battery 100. In addition, the buffer structure 50 is simple in configuration and convenient to process.

In a second aspect, the embodiments of the present application provide an electric device. The electric device includes the battery 100 in any one of the above embodiments. The battery 100 is configured to provide electric energy.

It should be noted that the electric device provided in the embodiments of the present application has the beneficial effects of the battery 100 in any one of the above embodiments. For the specific content, reference may be made to the above description of the beneficial effects of the battery. Details are not described here again in the embodiments of the present application.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a case, provided with an accommodating cavity;
a battery cell, disposed in the accommodating cavity;
a thermal management assembly, disposed in the accommodating cavity and configured to exchange heat with the battery cell, wherein the thermal management assembly comprises at least two heat exchange members;
a conductive member, electrically connected between each of the heat exchange members and the case; and
a buffer structure, arranged on at least one of the conductive member and the heat exchange member, and configured to enable the conductive member to always be in contact with each of the heat exchange members when the conductive member is deformed.

2. The battery according to claim 1, wherein the heat exchange member comprises a heat exchange plate and a current collector; the battery cell is clamped between two adjacent heat exchange plates in an arrangement direction of the two or more heat exchange members, and the current collector is connected to one side of the heat exchange plate in a direction intersecting with the arrangement direction and protrudes from the battery cell; the current collector is provided with a groove, and the conductive member is disposed in the groove and electrically connected to the current collector.

3. The battery according to claim 1 or 2, wherein the buffer structure comprises a buffer notch formed in the conductive member, and the buffer notch is located between two adjacent heat exchange members.

4. The battery according to claim 3, wherein the conductive member is in a strip-shaped structure and is arranged to extend in a first direction; a number of the buffer notches is two or more, and the two or more buffer notches are spaced apart from each other in the first direction.

5. The battery according to claim 4, wherein the buffer notches are formed in pairs, and the buffer notches formed in pairs are respectively located on two sides of the conductive member in the first direction; the buffer notches formed in pairs separate at least a portion of the conductive member to form a middle segment and end segments, with the middle segment and the end segments respectively connected, in an abutting manner, between the heat exchange member and the case.

6. The battery according to claim 5, wherein the buffer notch is formed between an outermost heat exchange member and a next outermost heat exchange member in the thermal management assembly, and in the first direction, a minimum distance between the buffer notch and the outermost heat exchange member is less than a minimum distance between the buffer notch and the next outermost heat exchange member.

7. The battery according to claim 4 or 5, wherein at least one of the buffer notches is a through hole penetrating through the conductive member, and/or, at least one of the buffer notches is a groove body, with a bottom of the groove body being connected to the conductive member.

8. The battery according to claim 7, wherein an aperture dimension of the buffer notch in the first direction is less than spacing between two adjacent heat exchange members.

9. The battery according to any one of claims 2 to 8, wherein the buffer structure further comprises a widening body; in the arrangement direction of the two or more heat exchange members, current collectors located at two ends of the thermal management assembly are provided with the widening body, and the widening body is electrically connected to the conductive member.

10. The battery according to claim 9, wherein in the arrangement direction of the heat exchange members, a length dimension of the widening body is less than spacing between two adjacent current collectors, and/or in a second direction, the length dimension of the widening body is less than a length dimension of the current collector, the second direction intersecting with the arrangement direction of the heat exchange members.

11. The battery according to claim 9, wherein in a third direction, a projection of the widening body at least partially overlaps with the conductive member, and/or spacing between the widening body and the conductive member is not greater than spacing between the current collector and the conductive member, the third direction intersecting with the arrangement direction of the heat exchange members.

12. An electric device, comprising the batteryaccording to any one of claims 1 to 11, wherein the batteryis configured to provide electric energy.
